# EUROPÄISCHE PATENTSCHRIFT

(11) **EP 3 610 295 B1**
(45) Veröffentlichungstag und Bekanntmachung des Hinweises auf die Patenterteilung: **06.01.2021**
(21) Anmeldenummer: 18708672.3
(22) Anmeldetag: 01.03.2018
(51) Int. Cl.: G01S 19/07, G01S 19/41, G01S 19/20

(54) **VERFAHREN ZUM ÜBERWACHEN EINER INTEGRITÄT VON REFERENZSTATIONEN EINES KORREKTURDIENSTSYSTEMS, KORREKTURDIENSTSYSTEM, VERFAHREN ZUM BETREIBEN EINES SATELLITENGESTÜTZTEN NAVIGATIONSSYSTEMS UND SATELLITENGESTÜTZTES NAVIGATIONSSYSTEM**
METHOD FOR MONITORING AN INTEGRITY OF REFERENCE STATIONS OF A CORRECTION SERVICE SYSTEM, CORRECTION SERVICE SYSTEM, METHOD FOR OPERATING A SATELLITE-ASSISTED NAVIGATION SYSTEM AND SATELLITE-ASSISTED NAVIGATION SYSTEM
PROCÉDÉ DE SURVEILLANCE DE L'INTÉGRITÉ DE STATIONS DE RÉFÉRENCE D'UN SYSTÈME DE SERVICE DE CORRECTION, SYSTÈME DE SERVICE DE CORRECTION, PROCÉDÉ DE FONCTIONNEMENT D'UN SYSTÈME DE NAVIGATION ASSISTÉ PAR SATELLITE ET SYSTÈME DE NAVIGATION ASSISTÉ PAR SATELLITE

(30) Priorität: 12.04.2017 DE 102017206280
(43) Veröffentlichungstag der Anmeldung: 19.02.2020
(73) Patentinhaber: Robert Bosch GmbH, 70442 Stuttgart (DE)
(72) Erfinder: LANGER, Markus, 71679 Asperg (DE); STROBEL, Jens, 71691 Freiberg Am Neckar (DE)
(86) Internationale Anmeldenummer: PCT/EP2018/055125
(87) Internationale Veröffentlichungsnummer: WO 2018/188848

(56) Entgegenhaltungen:
- US-A- 6 138 074
- US-A1- 2014 035 778
- US-A1- 2015 362 596
- US-A1- 2016 116 595

## Beschreibung

Die Erfindung betrifft ein Verfahren zum Überwachen einer Integrität von Referenzstationen eines Korrekturdienstsystems und ein Korrekturdienstsystem. Die Erfindung betrifft weiterhin ein Verfahren zum Betreiben eines satellitengestützten Navigationssystems und ein satellitengestütztes Navigationssystem.

### Stand der Technik

Globale Navigationssatellitensysteme (GNSS) ermöglichen eine Bestimmung einer Position von Nutzergeräten, beispielsweise von Navigationssystemen, in einem Koordinatensystem. Dabei werden mittels eines solchen Nutzergeräts Laufzeiten empfangener Satellitensignale von Satelliten des globalen Navigationssatellitensystems ermittelt und daraus Strecken zwischen den jeweiligen Satelliten und dem Nutzergerät abgeleitet. Als Übertragungsgeschwindigkeit der Satellitensignale wird üblicherweise die Lichtgeschwindigkeit angenommen. Wenn bei der Übertragung Störungen auftreten, beispielsweise aufgrund bestimmter Bedingungen in der Ionosphäre oder der Troposphäre, kommt es unter anderem zu Laufzeitänderungen, wodurch sich Fehler bei der Positionsbestimmung ergeben können. Zur Berücksichtigung derartiger Störungen sind Korrekturdienste bekannt, welche mittels eines existierenden Netzes von stationären Referenzstationen in Abhängigkeit der jeweils empfangenen Satellitensignale und bekannter Koordinaten der jeweiligen Referenzstation Korrekturwerte ermitteln und diese Korrekturwerte den Nutzergeräten bereitstellen. Mittels der Korrekturwerte sollen Fehler der beschriebenen Art bei der Positionsbestimmung der Nutzergeräte korrigiert werden. Eine Integrität einer Referenzstation im Sinne einer korrekten Funktionsfähigkeit derselben in Zusammenhang mit derartigen Korrekturdiensten liegt beispielsweise dann nicht vor, wenn ein fehlerfreier Betrieb derselben, beispielsweise ein Empfang von Satellitensignalen, aufgrund baulicher Veränderungen in der Umgebung dieser Referenzstation, einer Manipulation derselben oder anderer Defekte an der Referenzstation nicht möglich ist, wobei eine solche mangelnde Integrität zur Bereitstellung von fehlerbehafteten Korrekturwerten führen kann. Eine Unsicherheit bezüglich der Integrität von Referenzstationen ist insbesondere bei sicherheitsrelevanten Anwendungen kritisch. Eine effiziente und effektive Identifikation einer einzelnen Referenzstation mit mangelnder Integrität innerhalb eines Netzes von mehreren Referenzstationen wird dadurch erschwert, dass keine von der einzelnen Referenzstation unabhängigen, insbesondere unverfälschten, Beobachtungsgrößen, beispielsweise Satellitensignale, Korrekturwerte oder sonstige Daten, vorliegen, auf deren Basis die einzelne Referenzstation auf deren Integrität überprüft werden könnte. Ein Überwachen der Integrität von Referenzstationen in einem Netz von mehreren Referenzstationen ist daher extrem zeitaufwändig und kostenintensiv.

Aus der Offenlegungsschrift US 2015/362596 A1 geht ein Verfahren zum Überwachen einer Integrität einer Referenzstation hervor. Dabei werden aus einer Gruppe von Referenzstationen Master-Referenzstationen ausgewählt. In Abhängigkeit von durch die Master-Referenzstationen empfangenen Satellitensignalen wird ein Korrekturwert ermittelt. Anschließend wird die Integrität einer nicht ausgewählten Referenzstation überwacht. Hierzu wird eine Position der nicht ausgewählten Referenzstation in Abhängigkeit von dem Korrekturwert einerseits und von durch diese Referenzstation empfangenen Satellitensignalen andererseits ermittelt. Um die Integrität der nicht ausgewählten Referenzstation zu überwachen, wird letztlich die ermittelte Position mit der tatsächlichen Position der nicht ausgewählten Referenzstation verglichen.

### Offenbarung der Erfindung

Der Erfindung liegt die Aufgabe zugrunde, ein Verfahren zum Überwachen einer Integrität von Referenzstationen eines Korrekturdienstsystems, ein Korrekturdienstsystem, ein Verfahren zum Betreiben eines satellitengestützten Navigationssystems und ein satellitengestütztes Navigationssystem zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Verfahren zum Überwachen einer Integrität von bekannte und feststehende Koordinaten aufweisenden Referenzstationen eines Korrekturdienstsystems für ein satellitengestütztes Navigationssystem in einem Koordinatensystem geschaffen wird, wobei zumindest eine erste Gruppe der Referenzstationen betrieben wird, um Satellitensignale mehrerer Satelliten des satellitengestützten Navigationssystems zu empfangen. Im Rahmen des Verfahrens wird in einem Schritt a) eine erste Referenzstation aus der ersten Gruppe ausgewählt. In einem Schritt b) wird in Abhängigkeit der durch die übrigen Referenzstationen der ersten Gruppe jeweils empfangenen Satellitensignale und der bekannten Koordinaten der jeweiligen übrigen Referenzstationen der ersten Gruppe mindestens ein erster Korrekturwert ermittelt. Beispielsweise werden die übrigen Referenzstationen der ersten Gruppe auf eine Abweichung zwischen jeweils mittels der empfangenen Satellitensignale bestimmten Koordinaten und den bekannten Koordinaten der jeweiligen Referenzstation überprüft, wobei in Abhängigkeit von einer erfassten Abweichung der mindestens eine erste Korrekturwert ermittelt wird. In einem Schritt c) wird das Überwachen der Integrität durchgeführt, indem erste Koordinaten der ersten Referenzstation, welche mittels der von der ersten Referenzstation empfangenen Satellitensignale und dem mindestens einen ersten Korrekturwert bestimmt werden, mit den bekannten Koordinaten der ersten Referenzstation verglichen und auf zumindest eine erste Abweichung überprüft. Das Verfahren weist Vorteile gegenüber dem Stand der Technik auf. Dadurch, dass der erste Korrekturwert unabhängig von Daten, welche von der ersten Referenzstation bereitgestellt oder zumindest beeinflusst sind, bestimmt wird, kann die Integrität der ersten Referenzstation durch Überprüfung auf die zumindest eine erste Abweichung effektiv überprüft werden. Insbesondere wird mittels des Verfahrens eine Referenzstation mit mangelnder Integrität in einem Netz von mehreren Referenzstationen schnell und einfach identifiziert, wodurch eine hohe Genauigkeit einer Positionsbestimmung durch Nutzergeräte in dem satellitengestützten Navigationssystem sichergestellt wird. Vorzugsweise wird geprüft, ob bei Vorliegen einer ersten Abweichung der beschriebenen Art, bei den übrigen Referenzstationen der ersten Gruppe jeweils ein kritischer Versatz zwischen mittels der von den übrigen Referenzstationen der ersten Gruppe empfangenen Satellitensignale und dem mindestens einen ersten Korrekturwert ermittelten Koordinaten und den bekannten Koordinaten der jeweiligen übrigen Referenzstationen der ersten Gruppe vorliegt. Liegt insbesondere bei den übrigen Referenzstationen der ersten Gruppe kein kritischer Versatz vor, so kann der mindestens eine erste Korrekturwert als korrekt angesehen werden, wobei auf einen Integritätsmangel der ersten Referenzstation geschlossen werden kann. Liegt bei den übrigen Referenzstationen der ersten Gruppe ein kritischer Versatz vor, so kann der mindestens eine erste Korrekturwert als nicht korrekt angesehen werden. In diesem Fall kann nicht unmittelbar auf einen Integritätsmangel der ersten Referenzstation geschlossen werden. Es liegt insbesondere dann keine erste Abweichung vor, wenn die ersten Koordinaten der ersten Referenzstation von den bekannten Koordinaten der ersten Referenzstation nicht oder kaum abweichen. Dies kann insbesondere auf einen korrekten mindestens einen ersten Korrekturwert hindeuten, wobei sich eine korrekte Funktion der übrigen Referenzstationen der ersten Gruppe ableiten lassen kann. Insbesondere kann dies auch auf eine Integrität der ersten Referenzstation hindeuten. Vorzugsweise sind die Referenzstationen als stationäre, insbesondere lokale Referenzstationen ausgebildet. Besonders bevorzugt weist das Korrekturdienstsystem ein globales Netz mit einer Vielzahl von Referenzstationen auf. Bevorzugt ist vorgesehen, dass sich die Referenzstationen mindestens zu einer ersten Gruppe der angesprochenen Art zusammenfassen lassen, wobei die erste Gruppe vorzugsweise mindestens zwei, vorzugsweise mehr als zwei Referenzstationen umfasst. Unter den übrigen Referenzstationen der ersten Gruppe, welche nach der Auswahl der ersten Referenzstation aus der ersten Gruppe verbleiben, werden die Referenzstationen der ersten Gruppe ohne die erste Referenzstation verstanden. Vorzugsweise werden die Schritte a), b) und c) sequenziell durchgeführt, wobei der Schritt b) dem Schritt a) unmittelbar nachfolgt, und wobei der Schritt c) dem Schritt b) unmittelbar nachfolgt. Bei einer anderen bevorzugten Ausführungsform des Verfahrens ist es vorgesehen, dass sich die Schritte b) und c) zumindest teilweise überlappen.

Gemäß einer bevorzugten Ausführungsform des Verfahrens werden in einem Schritt d) zweite Koordinaten der ersten Referenzstation, welche nur mittels der von der ersten Referenzstation empfangenen Satellitensignale bestimmt werden, mit den bekannten Koordinaten der ersten Referenzstation verglichen und auf zumindest eine zweite Abweichung überprüft. Beim Bestimmen der zweiten Koordinaten der ersten Referenzstation wird mithin der mindestens eine erste Korrekturwert nicht berücksichtigt, sondern es werden lediglich die von der ersten Referenzstation empfangenen Satellitensignale in Verbindung mit den bekannten Koordinaten der ersten Referenzstation ausgewertet. Besonders bevorzugt wird der Schritt d) parallel zu dem Schritt b) und/oder dem Schritt c) durchgeführt. Es ist aber auch möglich, dass der Schritt d) unmittelbar nach dem Schritt c) oder in einer anderen sinnvollen zeitlichen Anordnung durchgeführt wird. Es wird somit in vorteilhafter Weise eine weitere Prüfung der ersten Referenzstation auf eine mangelnde Integrität durchgeführt, indem die zweiten Koordinaten auf die zumindest eine zweite Abweichung überprüft werden. Es liegt insbesondere dann keine zweite Abweichung vor, wenn die zweiten Koordinaten der ersten Referenzstation von den bekannten Koordinaten der ersten Referenzstation nicht oder kaum abweichen. Insbesondere kann bei Vorliegen einer derartigen zweiten Abweichung auf eine mangelnde Integrität der ersten Referenzstation geschlossen werden. Dadurch werden die Genauigkeit und Schnelligkeit des Verfahrens gesteigert.

Weiterhin ist es bevorzugt vorgesehen, dass eine zweite Gruppe der Referenzstationen, welche von der ersten Gruppe verschieden ist, betrieben wird, um Satellitensignale der mehreren Satelliten zu empfangen, wobei in einem Schritt e) in Abhängigkeit der durch die Referenzstationen der zweiten Gruppe jeweils empfangenen Satellitensignale und der bekannten Koordinaten der jeweiligen Referenzstation der zweiten Gruppe mindestens ein zweiter Korrekturwert ermittelt wird. Beispielsweise werden die Referenzstationen der zweiten Gruppe auf eine Abweichung zwischen jeweils mittels der empfangenen Satellitensignale bestimmten Koordinaten und den bekannten Koordinaten der jeweiligen Referenzstation überprüft, wobei in Abhängigkeit von einer erfassten Abweichung der mindestens eine zweite Korrekturwert ermittelt wird. Es werden dann vorzugsweise dritte Koordinaten der ersten Referenzstation, welche mittels der von der ersten Referenzstation empfangenen Satellitensignale und dem mindestens einen zweiten Korrekturwert bestimmt werden, mit den bekannten Koordinaten der ersten Referenzstation verglichen und auf zumindest eine dritte Abweichung überprüft. Vorzugsweise wird geprüft, ob bei Vorliegen einer dritten Abweichung der beschriebenen Art, bei den übrigen Referenzstationen der ersten Gruppe jeweils ein kritischer Versatz zwischen mittels der von den übrigen Referenzstationen der ersten Gruppe empfangenen Satellitensignale und dem mindestens einen zweiten Korrekturwert ermittelten Koordinaten und den bekannten Koordinaten der jeweiligen übrigen Referenzstationen der ersten Gruppe vorliegt. Liegt insbesondere bei den übrigen Referenzstationen der ersten Gruppe kein kritischer Versatz vor, so kann der mindestens eine zweite Korrekturwert als korrekt angesehen werden, wobei auf einen Integritätsmangel der ersten Referenzstation geschlossen werden kann. Liegt bei den übrigen Referenzstationen der ersten Gruppe ein kritischer Versatz vor, so kann der mindestens eine zweite Korrekturwert als nicht korrekt angesehen werden. In diesem Fall kann nicht unmittelbar auf einen Integritätsmangel der ersten Referenzstation geschlossen werden. Es liegt insbesondere dann keine dritte Abweichung vor, wenn die dritten Koordinaten der ersten Referenzstation von den bekannten Koordinaten der ersten Referenzstation nicht oder kaum abweichen. Dies kann insbesondere auf einen korrekten mindestens einen zweiten Korrekturwert hindeuten, wobei sich eine korrekte Funktion der Referenzstationen der zweiten Gruppe ableiten lassen kann. Insbesondere kann dies auch auf eine Integrität der ersten Referenzstation hindeuten. Es ist dabei möglich, dass sich die erste und die zweite Gruppe der Referenzstationen überschneiden, wobei sich besonders bevorzugt die erste und die zweite Gruppe der Referenzstationen nicht überschneiden. Besonders bevorzugt wird der Schritt e) parallel zu dem Schritt b) und/oder dem Schritt c) und/oder dem Schritt d) durchgeführt. Es ist aber auch möglich, dass der Schritt e) unmittelbar nach dem Schritt c) oder dem Schritt d) oder in einer anderen sinnvollen zeitlichen Anordnung durchgeführt wird. Es wird somit in vorteilhafter Weise eine weitere Prüfung der ersten Referenzstation auf eine mangelnde Integrität durchgeführt, indem die dritten Koordinaten auf die zumindest eine dritte Abweichung überprüft werden. Dadurch werden die Genauigkeit und Schnelligkeit des erfindungsgemäßen Verfahrens weiter gesteigert.

Erfindungsgemäß wird in einem Schritt f) eine zweite Referenzstation, welche von der ersten Referenzstation verschieden ist, aus der ersten Gruppe ausgewählt. Anschließend werden erfindungsgemäß, wenn keine kritische erste Abweichung ermittelt wird, die Schritte b) und c), sowie vorzugsweise die Schritte d) und/oder e) für die zweite Referenzstation durchgeführt. Es wird also erfindungsgemäß bei der Durchführung der Schritte b), c) und vorzugsweise d) und/oder e) für die zweite Referenzstation die erste Referenzstation weiter berücksichtigt. Eine kritische erste und/oder zweite und/oder dritte Abweichung liegt insbesondere dann nicht vor, wenn entweder keine oder kaum eine erste und/oder zweite und/oder dritte Abweichung vorliegt, oder eine solche zwar vorliegt, wobei aber ebenso bei den übrigen Referenzstationen der ersten Gruppe ein kritischer Versatz vorliegt. Insoweit ist eine derartige Abweichung mithin dann kritisch, wenn sie auf eine mangelnde Integrität der ersten Referenzstation hindeutet. Unter einer kritischen Abweichung wird also insbesondere eine solche Abweichung verstanden, welche mit einer erhöhten Wahrscheinlichkeit zur Bereitstellung von fehlerhaften Korrekturwerten durch die erste Referenzstation führt. Vorzugsweise folgt der Schritt f) dem Schritt c) und/oder dem Schritt d) und/oder dem Schritt e) unmittelbar nach. Auf diese Weise wird ein systematisches und schnelles Überprüfen der Referenzstationen der ersten Gruppe auf eine mangelnde Integrität ermöglicht.

Alternativ ist erfindungsgemäß vorgesehen, dass in einem Schritt f') die zweite Referenzstation aus der ersten Gruppe ausgewählt wird, und dass, bei Ermitteln einer kritischen ersten Abweichung die Schritte b) und c), sowie vorzugsweise d) und/oder e) für die zweite Referenzstation anstelle der ersten Referenzstation ohne Berücksichtigung der ersten Referenzstation durchgeführt werden. Bevorzugt ist vorgesehen, dass in dem Schritt f') die zweite Referenzstation aus der ersten Gruppe ausgewählt wird, und dass, bei Ermitteln einer kritischen zweiten und/oder dritten

Abweichung die Schritte b) und c), sowie vorzugsweise d) und/oder e) für die zweite Referenzstation anstelle der ersten Referenzstation ohne Berücksichtigung der ersten Referenzstation durchgeführt werden. Eine kritische erste und/oder zweite und/oder dritte Abweichung liegt insbesondere dann vor, wenn zusätzlich zu der ersten und/oder zweiten und/oder dritten Abweichung bei den übrigen Referenzstationen der ersten Gruppe ein kritischer Versatz vorliegt. Insoweit deutet eine derartige kritische Abweichung auf eine mangelnde Integrität der ersten Referenzstation hin. Bevorzugt wird in Schritt b) in Abhängigkeit der durch die übrigen Referenzstationen der ersten Gruppe - unter Ausschluss der ersten Referenzstation - jeweils empfangenen Satellitensignale und der bekannten Koordinaten der jeweiligen übrigen Referenzstation der ersten Gruppe - unter Ausschluss der ersten Referenzstation - der mindestens eine erste Korrekturwert ermittelt. Vorzugsweise wird in dem Schritt c) das Überwachen der Integrität durchgeführt, indem die ersten Koordinaten der zweiten Referenzstation, welche mittels der von der zweiten Referenzstation empfangenen Satellitensignale und dem mindestens einen ersten - unter Ausschluss der ersten Referenzstation ermittelten - Korrekturwert bestimmt werden, mit den bekannten Koordinaten der zweiten Referenzstation verglichen und auf die zumindest eine erste Abweichung überprüft. Vorzugsweise werden in dem Schritt d) die zweiten Koordinaten der zweiten Referenzstation, welche nur mittels der von der zweiten Referenzstation empfangenen Satellitensignale bestimmt werden, mit den bekannten Koordinaten der zweiten Referenzstation verglichen und auf die zumindest eine zweite Abweichung überprüft. Vorzugsweise werden in dem Schritt e) die dritten Koordinaten der zweiten Referenzstation, welche mittels der von der zweiten Referenzstation empfangenen Satellitensignale und dem mindestens einen zweiten Korrekturwert bestimmt werden, mit den bekannten Koordinaten der zweiten Referenzstation verglichen und auf die zumindest eine dritte Abweichung überprüft. Besonders bevorzugt folgt der Schritt f') dem Schritt e) unmittelbar nach. Vorzugsweise folgt der Schritt f') dem Schritt c) und/oder dem Schritt d) und/oder dem Schritt e) unmittelbar nach. Es ist dadurch insbesondere möglich, eine Referenzstation mit mangelnder Integrität insbesondere aus der ersten Gruppe der Referenzstationen auszuschließen, wobei eine Bereitstellung von fehlerbehafteten Korrekturwerten einfach und sicher verhindert werden kann. Insbesondere kann eine Referenzstation mit einer mangelnden Integrität solange ausgeschlossen werden, bis die Integrität derselben - beispielsweise mittels einer Reparatur - wieder hergestellt ist.

Gemäß einer weiteren bevorzugten Ausführungsform des Verfahrens werden unter Berücksichtigung einer erfassten kritischen ersten und/oder zweiten und/oder dritten Abweichung Unstimmigkeiten bezüglich der von der ersten und/oder der zweiten Referenzstation empfangenen Satellitensignale und/oder des mindestens einen ersten und/oder zweiten Korrekturwerts ermittelt. Unstimmigkeiten der angesprochenen Art beziehen sich insbesondere auf eine Fehlerhaftigkeit, Unvollständigkeit oder ein Fehlen der von der ersten und/oder der zweiten Referenzstation empfangenen Satellitensignale und/oder des mindestens einen ersten und/oder zweiten Korrekturwerts. Auf diese Weise kann effektiv die Ursache für eine mangelnde Integrität der ersten und/oder der zweiten Referenzstation ermittelt werden.

Es ist bevorzugt vorgesehen, dass die Schritte a), b) und c), sowie vorzugsweise d) und/oder e) und/oder f) und/oder f') für alle Referenzstationen der ersten Gruppe durchgeführt werden. Dadurch wird vorzugsweise eine Plausibilitätsprüfung von verschiedenen Korrekturwerten oder von für eine Ableitung von Korrekturwerten relevanten Daten, welche jeweils mittels verschiedener Referenzstationen insbesondere der ersten und/oder der zweiten Gruppe vorgegeben oder erzeugt werden, vorgenommen. Auf diese Weise kann auf effektive und effiziente Weise die erste Gruppe der Referenzstationen auf eine mangelnde Integrität überprüft werden, wobei vorzugsweise eine oder mehrere Referenzstationen mit mangelnder Integrität aus der ersten Gruppe ausgeschlossen werden.

Weiterhin ist bevorzugt vorgesehen, dass die ersten und/oder die zweiten und/oder die dritten Koordinaten der ersten und/oder der zweiten Referenzstation mittels eines ersten und eines zweiten Koordinatenermittlungsverfahrens bestimmt werden. Dabei sind das erste und das zweite Koordinatenermittlungsverfahren vorzugsweise voneinander verschieden. Besonders bevorzugt ist das erste Koordinatenermittlungsverfahren als Verfahren zur instantanen Koordinatenermittlung, vorzugsweise als nichtrekursives Verfahren ausgebildet. Dieses weist insbesondere eine kürzere Konvergenzzeit auf, wobei eine besonders kurze Zeit bis zu einer Fehlererkennung realisiert wird. Vorzugsweise ist das zweite Koordinatenermittlungsverfahren als Koordinatenermittlungsverfahren mit einer, im Vergleich zu dem ersten Koordinatenermittlungsverfahren längeren Konvergenzzeit ausgebildet, wobei insbesondere eine besonders hohe Genauigkeit der Koordinatenermittlung realisiert wird. Dadurch, dass im Rahmen des erfindungsgemäßen Verfahrens das erste und das zweite Koordinatenermittlungsverfahren durchgeführt werden, ist es insbesondere möglich, langsam anwachsende Fehler schnell zu erkennen und gleichzeitig eine geringe Falschalarmrate sowie eine hohe Genauigkeit der Positionsbestimmung in dem satellitengestützten Navigationssystem sicherzustellen. Insbesondere kann durch eine Abstimmung des ersten und des zweiten Koordinatenermittlungsverfahrens eine Optimierung des erfindungsgemäßen Verfahrens insbesondere hinsichtlich einer hohen Schnelligkeit der Fehlererkennung und einer hohen Genauigkeit, insbesondere einer effektiven Vermeidung von Falschalarmen, sichergestellt werden.

Bevorzugt ist vorgesehen, dass das erste und das zweite Koordinatenermittlungsverfahren parallel zueinander durchgeführt werden. Vorzugsweise werden das erste und das zweite Koordinatenermittlungsverfahren zeitlich parallel zueinander durchgeführt. Vorzugsweise werden das erste und das zweite Koordinatenermittlungsverfahren zumindest in Teilen, besonders bevorzugt vollständig, parallel durchgeführt. Hierdurch wird insbesondere ein schnelles und zuverlässiges Erkennen einer mangelnden Integrität von Referenzstationen sichergestellt.

Vorzugsweise wird bei dem ersten und/oder dem zweiten Koordinatenermittlungsverfahren nach einer durchgeführten Bestimmung der ersten und/oder der zweiten und/oder der dritten Koordinaten der ersten und/oder der zweiten Referenzstation mindestens ein, dem ersten und/oder dem zweiten Koordinatenermittlungsverfahren zugeordneter Filter zurückgesetzt. Insbesondere wird ein Filter der angesprochenen Art kontinuierlich neu initialisiert. Hierdurch werden insbesondere fehlerhafte Daten aus Zuständen des Filters entfernt, wodurch vorzugsweise verhindert wird, dass die fehlerhaften Daten weiterverarbeitet werden. Auf diese Weise wird effektiv eine Fehlerpropagation insbesondere in rekursiven Algorithmen verhindert. Dadurch kann in vorteilhafter Weise die Genauigkeit des erfindungsgemäßen Verfahrens gesteigert werden.

Bevorzugt wird mindestens ein Grenzwert für eine kritische erste und/oder zweite und/oder dritte Abweichung vorgegeben, welcher auf ein Erreichen oder ein Überschreiten desselben überwacht wird. Alternativ oder zusätzlich wird vorzugsweise mindestens ein Grenzwert für eine Unstimmigkeit bezüglich der von der ersten und/oder der zweiten Referenzstation empfangenen Satellitensignale und/oder des mindestens einen ersten und/oder zweiten Korrekturwerts und/oder für eine dem ersten und/oder dem zweiten Koordinatenermittlungsverfahren zugeordnete Konvergenzzeit vorgegeben, welcher auf ein Erreichen oder ein Überschreiten desselben überwacht wird. Eine erhöhte Konvergenzzeit kann insbesondere ein Indikator für eine Störung bei der Koordinatenermittlung sein, welche sich beispielsweise aus baulichen Veränderungen in der Umgebung der ersten und/oder der zweiten Referenzstation ergibt. Vorzugsweise wird das Überwachen des mindestens einen Grenzwerts auf ein Erreichen oder ein Überschreiten desselben kontinuierlich durchgeführt. Auf diese Weise wird mittels des erfindungsgemäßen Verfahrens eine effektive Überwachung der Integrität der Referenzstationen sichergestellt.

Bei einer weiteren bevorzugten Ausführungsform des Verfahrens wird in einem Normalbetrieb der mindestens eine erste und/oder zweite Korrekturwert mehreren Nutzergeräten des satellitengestützten Navigationssystems zur Korrektur jeweils empfangener Satellitensignale zur Ermittlung der jeweiligen eigenen Position zur Verfügung gestellt, wobei bei Erreichen oder Überschreiten des mindestens einen Grenzwerts eine weiterführende Information zur Gültigkeit des mindestens einen ersten und/oder zweiten Korrekturwerts, welche Angaben über das Erreichen oder Überschreiten des mindestens einen Grenzwerts enthält, erzeugt und den mehreren Nutzergeräten zur Verfügung gestellt wird. Im Rahmen des unten beschriebenen satellitengestützten Navigationssystems ist vorgesehen, dass die mehreren Nutzergeräte jeweils als Navigationssystem in einem Kraftfahrzeug, Mobiltelefon, Tablet-Computer, Wearable, einer Mobileinheit oder in anderer Form ausgebildet sind. Im Rahmen des unten beschriebenen Verfahrens zum Betreiben eines satellitengestützten Navigationssystems wird die weiterführende Information vorzugsweise über die mehreren Satelliten des satellitengestützten Navigationssystems oder auch andere Satelliten, oder ein Mobilfunknetz an die mehreren Nutzergeräte gesendet. Dabei ist es vorzugsweise vorgesehen, dass auf Basis der weiterführenden Information die mehreren Nutzergeräte jeweils über eine Nutzung des mindestens einen ersten und/oder zweiten Korrekturwerts im Rahmen der Ermittlung ihrer jeweiligen eigenen Position entscheiden. Alternativ oder zusätzlich ist es bevorzugt vorgesehen, dass in einem Normalbetrieb der mindestens eine erste und/oder zweite Korrekturwert den mehreren Nutzergeräten des satellitengestützten Navigationssystems zur Korrektur jeweils empfangener Satellitensignale zur Ermittlung der jeweiligen eigenen Position zur Verfügung gestellt wird, wobei bei Erreichen oder Überschreiten des mindestens einen Grenzwerts das Zurverfügungstellen des mindestens einen ersten und/oder zweiten Korrekturwerts für die mehreren Nutzergeräte zumindest in einer ausgewählten Region eingestellt wird. Die angesprochene Region ist vorzugsweise eine geographische Region. Vorzugsweise wird eine solche Region, in welcher das Zurverfügungstellen des mindestens einen ersten und/oder zweiten Korrekturwerts für die mehreren Nutzergeräte eingestellt wird, danach ausgewählt, ob in dieser Region insbesondere aufgrund einer Unstimmigkeit des mindestens einen ersten und/oder zweiten Korrekturwerts eine fehlerhafte Ermittlung der jeweiligen eigenen Position durch die mehreren Nutzergeräte zu erwarten ist. Auf diese Weise wird in vorteilhafter Weise bewirkt, dass insbesondere unstimmige Korrekturwerte nicht oder zumindest nicht ohne eine entsprechende weiterführende Information den mehreren Nutzergeräten zur Verfügung gestellt werden. Hierdurch kann eine hohe Qualität der Positionsbestimmung durch die mehreren Nutzergeräte sichergestellt werden.

Das erfindungsgemäße Verfahren zum Betreiben eines satellitengestützten Navigationssystems mit den Merkmalen des Anspruchs 13 führt ebenfalls zu den oben genannten Vorteilen. Das satellitengestützte Navigationssystem weist dabei mehrere Satelliten, mehrere Nutzergeräten und ein Korrekturdienstsystem mit bekannte und feststehende Koordinaten aufweisenden Referenzstationen in einem Koordinatensystem auf. Im Rahmen des Verfahrens wird zumindest eine erste Gruppe der Referenzstationen betrieben, um Satellitensignale der mehreren Satelliten des satellitengestützten Navigationssystems zu empfangen. Eine Integrität der Referenzstationen wird dabei durch das erfindungsgemäße Verfahren zum Überwachen einer Integrität von bekannte und feststehende Koordinaten aufweisenden Referenzstationen eines Korrekturdienstsystems überwacht.

Vorzugsweise wird das erfindungsgemäße Verfahren zum Überwachen einer Integrität von bekannte und feststehende Koordinaten aufweisenden Referenzstationen eines Korrekturdienstsystems mittels eines Korrekturdienstsystems der nachfolgend beschriebenen Art betrieben.

Das erfindungsgemäße Korrekturdienstsystem mit den Merkmalen des Anspruchs 14 führt ebenfalls zu den oben genannten Vorteilen. Das erfindungsgemäße Korrekturdienstsystem weist Referenzstationen in einem Koordinatensystem auf und ist dazu ausgebildet, das erfindungsgemäße Verfahren zum Überwachen einer Integrität von bekannte und feststehende Koordinaten aufweisenden Referenzstationen eines Korrekturdienstsystems durchzuführen. Hierzu sind insbesondere zur Durchführung des erfindungsgemäßen Verfahrens programmierte Steuergeräte vorhanden, die vorzugsweise zur Ansteuerung der Referenzstationen des erfindungsgemäßen Korrekturdienstsystems dem jeweiligen Gerät zugeordnet sind. Vorzugsweise sind zur Durchführung des erfindungsgemäßen Verfahrens programmierte Steuergeräte zur Ansteuerung weiterer für das Verfahren erforderlicher oder vorteilhafter Einrichtungen des erfindungsgemäßen Korrekturdienstsystems vorhanden.

Vorzugsweise wird das erfindungsgemäße Verfahren zum Betreiben eines satellitengestützten Navigationssystems mittels eines satellitengestützten Navigationssystems der nachfolgend beschriebenen Art betrieben.

Das erfindungsgemäße satellitengestützte Navigationssystem mit den Merkmalen des Anspruchs 15 führt ebenfalls zu den oben genannten Vorteilen. Das erfindungsgemäße satellitengestützte Navigationssystem weist mehrere Satelliten, mehrere Nutzergeräte und ein Korrekturdienstsystems der oben beschriebenen Art auf. Hierzu sind insbesondere zur Durchführung des erfindungsgemäßen Verfahrens programmierte Steuergeräte vorhanden, die vorzugsweise zur Ansteuerung der mehreren Satelliten, der mehreren Nutzergeräte und des Korrekturdienstsystems des erfindungsgemäßen satellitengestützten Navigationssystems dem jeweiligen Gerät zugeordnet sind. Vorzugsweise sind zur Durchführung des erfindungsgemäßen Verfahrens programmierte Steuergeräte zur Ansteuerung weiterer für das Verfahren erforderlicher oder vorteilhafter Einrichtungen des erfindungsgemäßen satellitengestützten Navigationssystems vorhanden.

Die Erfindung wird im Folgenden anhand der Zeichnung näher erläutert. Dabei zeigen
- Figur 1: eine schematische Darstellung eines Ausführungsbeispiels eines vorteilhaften Verfahrens zum Überwachen einer Integrität von Referenzstationen eines Korrekturdienstsystems, und
- Figur 2: eine schematische Darstellung eines Ausführungsbeispiels eines vorteilhaften Korrekturdienstsystems.

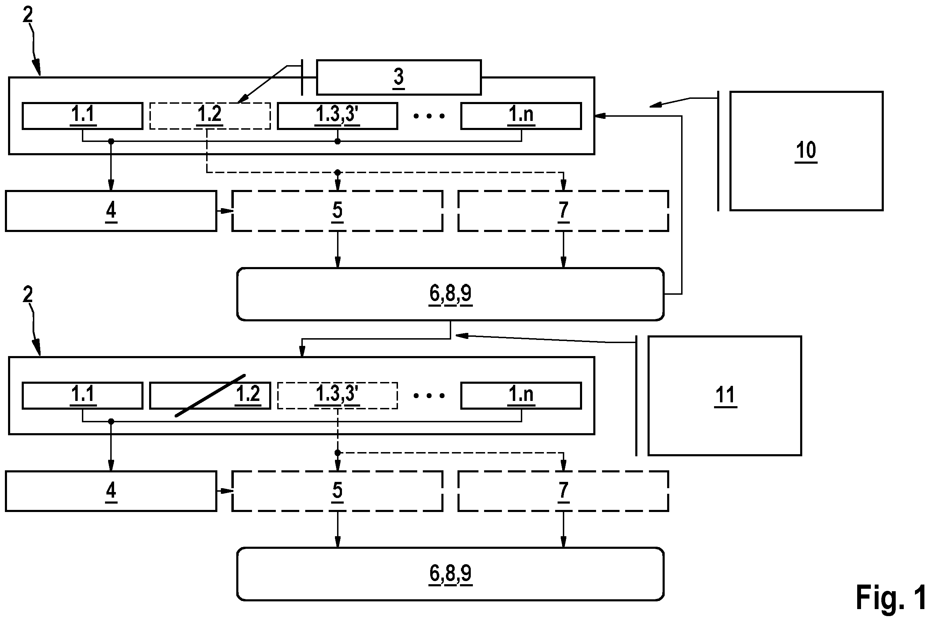

Figur 1 zeigt eine schematische Darstellung eines Ausführungsbeispiels eines vorteilhaften Verfahrens zum Überwachen einer Integrität von bekannte und feststehende Koordinaten aufweisenden Referenzstationen 1.1, 1.2, 1.3, ..., 1.n eines Korrekturdienstsystems für ein satellitengestütztes Navigationssystem in einem Koordinatensystem, wobei zumindest eine erste Gruppe 2 der Referenzstationen 1.1, 1.2, 1.3, ..., 1.n betrieben wird, um Satellitensignale mehrerer Satelliten des satellitengestützten Navigationssystems zu empfangen. Das vorteilhafte Verfahren zeichnet sich dadurch aus, dass in einem Schritt a) eine erste Referenzstation 3 aus der ersten Gruppe 2 ausgewählt wird. Die erste Referenzstation 3 entspricht bei dem hier dargestellten Ausführungsbeispiel des vorteilhaften Verfahrens der Referenzstation 1.2. Anschließend wird in einem Schritt b) - in der Figur 1 dargestellt durch die Bezugsziffer 4 - in Abhängigkeit der durch die übrigen Referenzstationen 1.1, 1.3, ..., 1.n der ersten Gruppe 2 jeweils empfangenen Satellitensignale und der bekannten Koordinaten der jeweiligen übrigen Referenzstation 1.1, 1.3, ..., 1.n der ersten Gruppe 2 mindestens ein erster Korrekturwert ermittelt. Dieser Schritt der Korrekturwertvorgabe wird vorzugsweise in einem Datenzentrum oder mittels eines Servers des Korrekturdienstsystems durchgeführt. Anschließend wird in einem Schritt c) das Überwachen der Integrität durchgeführt, indem erste Koordinaten der ersten Referenzstation 1.2, 3, welche mittels der von der ersten Referenzstation 1.2, 3 empfangenen Satellitensignale und dem mindestens einen ersten Korrekturwert - dargestellt durch das Bezugszeichen 5 - bestimmt werden, mit den bekannten Koordinaten der ersten Referenzstation 1.2, 3 verglichen und auf zumindest eine erste Abweichung überprüft werden, was durch das Bezugszeichen 6 in der Figur 1 dargestellt ist. Vorzugsweise wird dabei geprüft, ob bei Vorliegen einer ersten Abweichung der beschriebenen Art, bei den übrigen Referenzstationen 1.1, 1.3, ..., 1.n der ersten Gruppe 2 jeweils ein kritischer Versatz zwischen mittels der von den übrigen Referenzstationen 1.1, 1.3, ..., 1.n der ersten Gruppe 2 empfangenen Satellitensignale und dem mindestens einen ersten Korrekturwert ermittelten Koordinaten und den bekannten Koordinaten der jeweiligen übrigen Referenzstationen 1.1, 1.3, ..., 1.n der ersten Gruppe 2 vorliegt. Liegt insbesondere bei den übrigen Referenzstationen 1.1, 1.3, ..., 1.n der ersten Gruppe 2 kein kritischer Versatz vor, so kann der mindestens eine erste Korrekturwert als korrekt angesehen werden, wobei auf einen Integritätsmangel der ersten Referenzstation 1.2, 3 geschlossen werden kann. Liegt bei den übrigen Referenzstationen 1.1, 1.3, ..., 1.n der ersten Gruppe 2 ein kritischer Versatz vor, so kann der mindestens eine erste Korrekturwert als nicht korrekt angesehen werden. In diesem Fall kann nicht unmittelbar auf einen Integritätsmangel der ersten Referenzstation 1.2, 3 geschlossen werden. Es liegt insbesondere dann keine erste Abweichung vor, wenn die ersten Koordinaten der ersten Referenzstation 1.2, 3 von den bekannten Koordinaten der ersten Referenzstation 1.2, 3 nicht oder kaum abweichen. Dies kann insbesondere auf einen korrekten mindestens einen ersten Korrekturwert hindeuten, wobei sich eine korrekte Funktion der übrigen Referenzstationen 1.1, 1.3, ..., 1.n der ersten Gruppe 2 ableiten lassen kann. Insbesondere kann dies auch auf eine Integrität der ersten Referenzstation 1.2, 3 hindeuten.

Vorzugsweise werden in einem Schritt d) zweite Koordinaten der ersten Referenzstation 1.2, 3, welche nur mittels der von der ersten Referenzstation 1.2, 3 empfangenen Satellitensignale - dargestellt durch das Bezugszeichen 7 - bestimmt werden, mit den bekannten Koordinaten der ersten Referenzstation 1.2, 3 verglichen und auf zumindest eine zweite Abweichung überprüft, was durch das Bezugszeichen 8 dargestellt ist. Insbesondere kann bei Vorliegen einer derartigen zweiten Abweichung auf eine mangelnde Integrität der ersten Referenzstation 1.2, 3 geschlossen werden.

Bevorzugt wird eine zweite - in der Figur 1 nicht dargestellte - Gruppe der Referenzstationen, welche von der ersten Gruppe 2 verschieden ist, betrieben, um Satellitensignale der mehreren Satelliten zu empfangen, wobei in einem Schritt e) in Abhängigkeit der durch die Referenzstationen der zweiten Gruppe jeweils empfangenen Satellitensignale und der bekannten Koordinaten der jeweiligen Referenzstation der zweiten Gruppe mindestens ein zweiter Korrekturwert ermittelt wird. Es werden dann vorzugsweise dritte Koordinaten der ersten Referenzstation 1.2, 3, welche mittels der von der ersten Referenzstation 1.2, 3 empfangenen Satellitensignale und dem mindestens einen zweiten Korrekturwert bestimmt werden, mit den bekannten Koordinaten der ersten Referenzstation 1.2, 3 verglichen und auf zumindest eine dritte Abweichung überprüft, was in der Figur 1 durch das Bezugszeichen 9 dargestellt ist. Vorzugsweise wird geprüft, ob bei Vorliegen einer dritten Abweichung der beschriebenen Art, bei den übrigen Referenzstationen 1.1, 1.3, ..., 1.n der ersten Gruppe 2 jeweils ein kritischer Versatz zwischen mittels der von den übrigen Referenzstationen 1.1, 1.3, ..., 1.n der ersten Gruppe 2 empfangenen Satellitensignale und dem mindestens einen zweiten Korrekturwert ermittelten Koordinaten und den bekannten Koordinaten der jeweiligen übrigen Referenzstationen 1.1, 1.3, ..., 1.n der ersten Gruppe 2 vorliegt. Liegt insbesondere bei den übrigen Referenzstationen 1.1, 1.3, ..., 1.n der ersten Gruppe 2 kein kritischer Versatz vor, so kann der mindestens eine zweite Korrekturwert als korrekt angesehen werden, wobei auf einen Integritätsmangel der ersten Referenzstation 1.2, 3 geschlossen werden kann. Liegt bei den übrigen Referenzstationen 1.1, 1.3, ..., 1.n der ersten Gruppe 2 ein kritischer Versatz vor, so kann der mindestens eine zweite Korrekturwert als nicht korrekt angesehen werden. In diesem Fall kann nicht unmittelbar auf einen Integritätsmangel der ersten Referenzstation 1.2, 3 geschlossen werden. Es liegt insbesondere dann keine dritte Abweichung vor, wenn die dritten Koordinaten der ersten Referenzstation 1.2, 3 von den bekannten Koordinaten der ersten Referenzstation 1.2, 3 nicht oder kaum abweichen. Dies kann insbesondere auf einen korrekten mindestens einen zweiten Korrekturwert hindeuten, wobei sich eine korrekte Funktion der Referenzstationen der zweiten Gruppe ableiten lassen kann. Insbesondere kann dies auch auf eine Integrität der ersten Referenzstation 1.2, 3 hindeuten.

Vorzugsweise werden in einem Schritt f) eine zweite Referenzstation 3', welche von der ersten Referenzstation 1.2, 3 verschieden ist, aus der ersten Gruppe 2 ausgewählt. Die zweite Referenzstation 3' entspricht bei dem hier dargestellten Ausführungsbeispiel der Referenzstation 1.3. Wenn keine kritische erste und/oder zweite und/oder dritte Abweichung - gemäß der Bezugszeichen 6, 8, 9 - ermittelt wird, werden vorzugsweise die Schritte b) und c), sowie insbesondere d) und/oder e) für die zweite Referenzstation 1.3, 3' durchgeführt, wobei eine derartige Rekursion schematisch mit dem Bezugszeichen 10 in der Figur 1 dargestellt ist.

Bevorzugt wird in einem Schritt f') die zweite Referenzstation 1.3, 3' aus der ersten Gruppe 2 ausgewählt, wobei bei Ermitteln einer kritischen ersten und/oder zweiten und/oder dritten Abweichung - 6, 8, 9 - die Schritte b) und c), sowie vorzugsweise d) und/oder e) für die zweite Referenzstation 1.3, 3' anstelle der ersten Referenzstation 1.2, 3 ohne Berücksichtigung der ersten Referenzstation 1.2, 3 durchgeführt werden, wobei eine derartige Rekursion in der Figur 1 schematisch mit dem Bezugszeichen 11 dargestellt ist. Im - aus Sicht eines Betrachters - unteren Teil der Figur 1 sind schematisch die Schritte b), c), d) und e) für die zweite Referenzstation 1.3, 3' dargestellt. Die erste Referenzstation 1.2, 3 ist hier schematisch als aus der ersten Gruppe 2 ausgeschlossen dargestellt. Ansonsten sind gleiche und funktionsgleiche Elemente mit gleichen Bezugszeichen versehen, sodass insofern auf die vorangegangene Beschreibung verwiesen wird.

Vorzugsweise werden unter Berücksichtigung einer erfassten kritischen ersten und/oder zweiten und/oder dritten Abweichung Unstimmigkeiten bezüglich der von der ersten Referenzstation 1.2, 3 und/oder der zweiten Referenzstation 1.3, 3' empfangenen Satellitensignale und/oder des mindestens einen ersten und/oder zweiten Korrekturwerts ermittelt.

Bevorzugt wird vorgesehen, dass die Schritte a) bis c) und vorzugsweise d) und/oder e) und/oder f) und/oder f') für alle Referenzstationen 1.1, 1.2, 1.3, 1.n der ersten Gruppe 2 durchgeführt werden.

Vorzugsweise werden die ersten und/oder die zweiten und/oder die dritten Koordinaten der ersten Referenzstation 1.2, 3 und/oder der zweiten Referenzstation 1.3, 3' mittels eines ersten und eines zweiten Koordinatenermittlungsverfahrens bestimmt, wobei das erste und das zweite Koordinatenermittlungsverfahren voneinander verschieden sind.

Besonders bevorzugt werden das erste und das zweite Koordinatenermittlungsverfahren parallel zueinander durchgeführt.

Vorzugsweise wird bei dem ersten und/oder dem zweiten Koordinatenermittlungsverfahren nach einer durchgeführten Bestimmung der ersten Koordinaten - 5 - und/oder der zweiten Koordinaten - 7 - und/oder der dritten Koordinaten - 9 - der ersten Referenzstation 1.2, 3 und/oder der zweiten Referenzstation 1.3, 3' mindestens ein, dem ersten und/oder dem zweiten Koordinatenermittlungsverfahren zugeordneter Filter zurückgesetzt.

Es ist bevorzugt vorgesehen, dass mindestens ein Grenzwert für eine kritische ersten und/oder zweite und/oder dritte Abweichung vorgegeben wird, welcher auf ein Erreichen oder ein Überschreiten desselben überwacht wird. Alternativ oder zusätzlich wird mindestens ein Grenzwert für eine Unstimmigkeit bezüglich der von der ersten Referenzstation 1.2, 3 und/oder der zweiten Referenzstation 1.3, 3' empfangenen Satellitensignale und/oder des mindestens einen ersten und/oder zweiten Korrekturwerts und/oder für eine dem ersten und/oder dem zweiten Koordinatenermittlungsverfahren zugeordnete Konvergenzzeit vorgegeben, welcher auf ein Erreichen oder ein Überschreiten desselben überwacht wird.

Bevorzugt ist vorgesehen, dass in einem Normalbetrieb der mindestens eine erste und/oder zweite Korrekturwert mehreren Nutzergeräten des satellitengestützten Navigationssystems zur Korrektur jeweils empfangener Satellitensignale zur Ermittlung der jeweiligen eigenen Position zur Verfügung gestellt wird, wobei bei Erreichen oder Überschreiten des mindestens eines Grenzwerts eine weiterführende Information zur Gültigkeit des mindestens einen ersten und/oder zweiten Korrekturwerts, welche Angaben über das Erreichen oder Überschreiten des mindestens einen Grenzwerts enthält, erzeugt und den mehreren Nutzergeräten zur Verfügung gestellt wird. Alternativ oder zusätzlich wird vorzugsweise das Zurverfügungstellen des mindestens einen ersten und/oder zweiten Korrekturwerts für die mehreren Nutzergeräte zumindest in einer ausgewählten Region eingestellt. Der mindestens eine erste und/oder zweite Korrekturwert ist vorzugsweise global gültig ausgebildet. Alternativ ist der mindestens eine erste und/oder zweite Korrekturwert bevorzugt als wenigstens ein Modellparameter ausgebildet, in Abhängigkeit dessen die jeweils eigene Position der mehreren Nutzergeräte ermittelbar ist.

Im Rahmen eines Verfahrens zum Betreiben eines satellitengestützten Navigationssystems mit mehreren Satelliten, mehreren Nutzergeräten und einem Korrekturdienstsystem, wobei das Korrekturdienstsystem bekannte und feststehende Koordinaten aufweisende Referenzstationen 1.1, 1.2, 1.3, 1.n in einem Koordinatensystem aufweist, und wobei zumindest eine erste Gruppe 2 der Referenzstationen 1.1, 1.2, 1.3, 1.n betrieben wird, um Satellitensignale der mehreren Satelliten des satellitengestützten Navigationssystems zu empfangen, wird eine Integrität der Referenzstationen 1.1, 1.2, 1.3, 1.n mittels eines Verfahrens der oben anhand von Figur 1 beschriebenen Art überwacht.

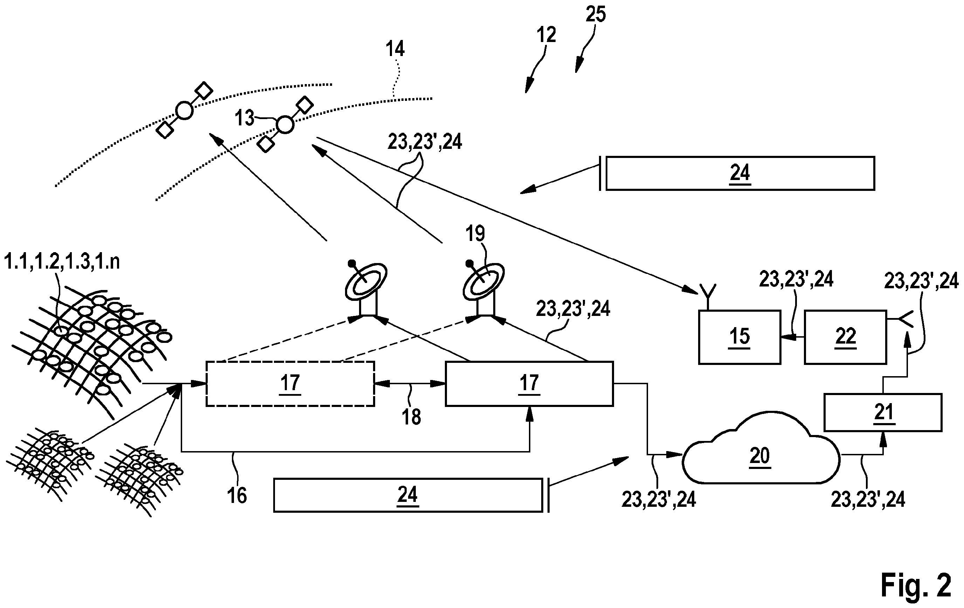

Figur 2 zeigt eine schematische Darstellung eines Ausführungsbeispiels eines vorteilhaften Korrekturdienstsystems 12. Gleiche und funktionsgleiche Elemente sind mit gleichen Bezugszeichen versehen, so dass insofern auf die vorangegangene Beschreibung verwiesen wird. Das Korrekturdienstsystem 12 weist die bekannte und feststehende Koordinaten aufweisenden Referenzstationen 1.1, 1.2, 1.3, 1.n in einem Koordinatensystem auf und ist dazu ausgebildet, das oben beschriebene Verfahren zum Überwachen einer Integrität von bekannte und feststehende Koordinaten aufweisende Referenzstationen eines Korrekturdienstsystems 12 durchzuführen bzw. wird mittels des oben beschriebenen Verfahrens betrieben.

Bei dem in Figur 2 dargestellten Ausführungsbeispiel befindet sich das Korrekturdienstsystem 12 in einem Koordinatensystem. Das Korrekturdienstsystem 12 weist mindestens einen - hier zwei - Kommunikationssatelliten 13 auf. Die Kommunikationssatelliten 13 bewegen sich hier jeweils auf einer Satellitenbahn 14. Es ist bevorzugt vorgesehen, dass ein Kommunikationssatellit 13 jeweils einem geographischen Gebiet, insbesondere einem Kontinent, zugeordnet ist.

Weiterhin weist das Korrekturdienstsystem 12 die mehreren bekannte und feststehende Koordinaten aufweisenden Referenzstationen 1.1, 1.2, 1.3, 1.n, vorzugsweise in einem globalen Netz, auf, wobei der Übersichtlichkeit wegen nur eine solche Referenzstation mit einem Bezugszeichen versehen ist. Das vorteilhafte Korrekturdienstsystem 12 ist vorzugsweise eingerichtet zur Überwachung einer Integrität der Referenzstationen 1.1, 1.2, 1.3, 1.n in dem Koordinatensystem.

Das Korrekturdienstsystem 12 ist Teil eines satellitengestützten Navigationssystems 25, welches über das Korrekturdienstsystem 12 hinaus noch mehrere - in Figur 2 nicht dargestellte - Satelliten und mehrere Nutzergeräte 15 aufweist. In Figur 2 ist der Übersichtlichkeit wegen nur ein Nutzergerät 15 dargestellt. Bei dem in Figur 2 dargestellten Ausführungsbeispiel werden mittels der Referenzstationen 1.1, 1.2, 1.3, 1.n vorzugsweise Datenpakete 16 mit Informationen zur Ermittlung von Korrekturwerten, beispielsweise Satellitensignalen, verarbeiteten Satellitensignalen oder anderen Informationen, einem Datenzentrum oder einem Server 17 - hier zwei Datenzentren oder Servern 17 - des Korrekturdienstsystems 12 zur Verfügung gestellt. Vorzugsweise werden die Datenzentren oder Server 17 miteinander abgeglichen, wobei vorzugsweise die Datenpakete 16 und/oder der mindestens eine erste und/oder zweite Korrekturwert auf eine Konsistenz überprüft werden, dargestellt durch den Pfeil 18.

Die Datenzentren oder Server 17 sind jeweils mit Sendestationen 19 - hier jeweils zwei Sendestationen 19 - des Korrekturdienstsystems 12 kommunikationsverbunden. Mittels der Sendestationen 19 wird vorzugsweise jeweils eine Kommunikationsverbindung zwischen den Datenzentren oder Servern 17 und den Kommunikationssatelliten 13 realisiert. Die mehreren Nutzergeräte 15 sind vorzugsweise jeweils mit den Kommunikationssatelliten 13 kommunikationsverbindbar, besonders bevorzugt kommunikationsverbunden. Durch die redundante Verfügbarkeit der Datenzentren oder Server 17 und/oder der Sendestationen 19 wird bei Ausfall eines Datenzentrums oder Servers 17 oder einer Sendestation 19 ein sicherer Betrieb des Korrekturdienstsystems 12 gewährleistet.

Optional weisen die Datenzentren oder Server 17 bevorzugt zusätzlich - wie in Figur 2 dargestellt -, oder auch alternativ, jeweils eine Kommunikationsverbindung mit einem Backend-Server 20 des Korrekturdienstsystems 12 auf. Der Backend-Server 20 ist dann vorzugsweise mit einem Mobilfunknetz 21 des Korrekturdienstsystems 12 kommunikationsverbunden. Das Mobilfunknetz 21 ist hier mit einem Kommunikationsmodul 22 des satellitengestützten Navigationssystems 25, welches vorzugsweise jeweils einem der mehreren Nutzergeräte 15 zugeordnet ist, insbesondere drahtlos kommunikationsverbunden. Bei diesem Ausführungsbeispiel steht ein Kommunikationsmodul 22 jeweils in Kommunikationsverbindung mit einem der mehreren Nutzergeräte 15.

Das vorteilhafte satellitengestützte Navigationssystem 25 weist die mehreren - hier nicht dargestellten - Satelliten auf, welche bei einem weiteren - hier nicht dargestellten - bevorzugten Ausführungsbeispiel auch als Kommunikationssatelliten 13 ausgebildet sind. Vorzugsweise sind die mehreren Satelliten dazu eingerichtet, die - hier nicht dargestellten - Satellitensignale zumindest an die erste Gruppe 2 der Referenzstationen 1.1, 1.2, 1.3, 1.n zu senden. Es wird zumindest eine erste Gruppe 2 der Referenzstationen 1.1, 1.2, 1.3, 1.n betrieben, um die Satellitensignale der mehreren Satelliten des satellitengestützten Navigationssystems 25 zu empfangen. Es ist in Zusammenhang mit dem vorteilhaften Korrekturdienstsystem 12 vorgesehen, dass die erste Referenzstation 3 aus der ersten Gruppe 2 der Referenzstationen 1.1, 1.2, 1.3, 1.n auswählbar ist, wobei die erste Referenzstation 3 bei dem in Figur 1 dargestellten Ausführungsbeispiel der Referenzstation 1.2 entspricht. In Abhängigkeit der durch die übrigen Referenzstationen 1.1, 1.3, ..., 1.n der ersten Gruppe 2 jeweils empfangenen Satellitensignale und der bekannten Koordinaten der jeweiligen übrigen Referenzstation 1.1, 1.3, ..., 1.n der ersten Gruppe 2 wird der mindestens eine erste Korrekturwert 23 ermittelt. Weiterhin sind zur Überwachung der Integrität die ersten Koordinaten der ersten Referenzstation 1.2, 3, welche mittels der von der ersten Referenzstation 1.2, 3 empfangenen Satellitensignale und dem mindestens einen ersten Korrekturwert 23 bestimmbar sind, mit den bekannten Koordinaten der ersten Referenzstation 1.2, 3 vergleichbar und auf die zumindest eine erste Abweichung überprüfbar.

Bei einem weiteren Ausführungsbeispiel des vorteilhaften Korrekturdienstsystems 12 ist vorgesehen, dass in einem Normalbetrieb der mindestens eine erste Korrekturwert 23 und/oder zweite Korrekturwert 23' den mehreren Nutzergeräten 15 des satellitengestützten Navigationssystems 25 zur Korrektur jeweils empfangener Satellitensignale zur Ermittlung der jeweiligen eigenen Position zur Verfügung gestellt wird, wobei bei Erreichen oder Überschreiten des mindestens eines Grenzwerts eine weiterführende Information 24 zur Gültigkeit des mindestens einen ersten und/oder zweiten Korrekturwerts 23, 23', welche Angaben über das Erreichen oder Überschreiten des mindestens einen Grenzwerts enthält, erzeugt und den mehreren Nutzergeräten 15 zur Verfügung gestellt wird. Alternativ oder zusätzlich wird vorzugsweise das Zurverfügungstellen des mindestens einen ersten und/oder zweiten Korrekturwerts 23, 23' für die mehreren Nutzergeräte 15 zumindest in einer ausgewählten Region eingestellt.

Bei dem in Figur 2 dargestellten Ausführungsbeispiel des Korrekturdienstsystems 12 wird der mindestens eine erste und/oder zweite Korrekturwert 23, 23' vorzugsweise mittels der Datenzentren oder Server 17 in Abhängigkeit der von den Referenzstationen 1.1, 1.2, 1.3, 1.n bereitgestellten Datenpakete 16 ermittelt. Der mindestens eine erste und/oder zweite Korrekturwert 23, 23' wird über die Sendestationen 19 und die Kommunikationssatelliten 13 den mehreren Nutzergeräten 15 zur Verfügung gestellt, insbesondere an die mehreren Nutzergeräte 15 gesendet. Bei diesem Ausführungsbeispiel wird vorzugsweise parallel der mindestens eine erste und/oder zweite Korrekturwert 23, 23' den mehreren Nutzergeräten 15 über den Backend-Server 20, das Mobilfunknetz 21 und das den mehreren Nutzergeräten 15 jeweils zugeordnete Kommunikationsmodul 22 zur Verfügung gestellt, insbesondere zugesendet. Vorzugsweise empfangen die mehreren Nutzergeräte 15 den mindestens einen ersten und/oder zweiten Korrekturwert 23, 23' entweder von den Kommunikationssatelliten 13 oder über das Mobilfunknetz 21, sodass eine sichere Versorgung der mehreren Nutzergeräte 15 mit dem mindestens einen ersten und/oder zweiten Korrekturwert 23, 23' gewährleistet wird.

Bei dem in Figur 2 dargestellten Ausführungsbeispiel wird die weiterführende Information 24 vorzugsweise zusammen mit dem mindestens einen ersten und/oder zweiten Korrekturwert 23, 23' den mehreren Nutzergeräten 15 zur Verfügung gestellt. Die weiterführende Information 24 wird vorzugsweise mittels der Datenzentren oder Server 17 erzeugt. Vorzugsweise wird die weiterführende Information 24 über die Sendestationen 19 und die Kommunikationssatelliten 13 den mehreren Nutzergeräten 15 zur Verfügung gestellt, insbesondere den mehreren Nutzergeräten 15 zugesendet. Alternativ oder zusätzlich wird vorzugsweise die weiterführende Information 24 den mehreren Nutzergeräten 15 über den Backend-Server 20, das Mobilfunknetz 21 und das Kommunikationsmodul 22 zur Verfügung gestellt, insbesondere den mehreren Nutzergeräten 15 zugesendet. Vorzugsweise wird die weiterführende Information 24 in einem gemeinsamen Datenstrom mit dem mindestens einen ersten und/oder zweiten Korrekturwert 23, 23' den mehreren Nutzergeräten 15 zur Verfügung gestellt, besonders bevorzugt zugesendet.

Bei einem anderen bevorzugten Ausführungsbeispiel wird die weiterführende Information 24 in anderer Weise, insbesondere nicht mittels der Datenzentren oder Server 17, erzeugt. Die weiterführende Information 24 wird vorzugsweise getrennt von dem mindestens einen ersten und/oder zweiten Korrekturwert 23, 23' den mehreren Nutzergeräten 15 zur Verfügung gestellt.

Insgesamt zeigt sich, dass mittels des erfindungsgemäßen Verfahrens und des erfindungsgemäßen Korrekturdienstsystems 12 die Integrität der Referenzstationen 1.1, 1.2, 1.3, 1.n überwacht werden kann, wobei Referenzstationen 1.1, 1.2, 1.3, 1.n mit einer mangelnden Integrität aus der ersten Gruppe 2 der Referenzstationen 1.1, 1.2, 1.3, 1.n schnell und sicher ausgeschlossen werden können. Auf diese Weise wird eine hohe Genauigkeit und Sicherheit der Positionsermittlung von Nutzergeräten 15 in dem satellitengestützten Navigationssystem 25 sichergestellt.

## Patentansprüche

1. Verfahren zum Überwachen einer Integrität von bekannte und feststehende Koordinaten aufweisenden Referenzstationen (1.1,1.2,1.3,...,1.n) eines Korrekturdienstsystems (12) für ein satellitengestütztes Navigationssystem (25) in einem Koordinatensystem, wobei zumindest eine erste Gruppe (2) der Referenzstationen (1.1,1.2,1.3,1,...,1.n) betrieben wird, um Satellitensignale mehrerer Satelliten des satellitengestützten Navigationssystems (25) zu empfangen, wobei
a) eine erste Referenzstation (1.2,3) aus der ersten Gruppe (2) ausgewählt wird,
b) in Abhängigkeit der durch die übrigen Referenzstationen (1.1,1.3,...,1.n) der ersten Gruppe (2) jeweils empfangenen Satellitensignale und der bekannten Koordinaten der jeweiligen übrigen Referenzstation (1.1,1.3,...,1.n) der ersten Gruppe (2) mindestens ein erster Korrekturwert (23) ermittelt wird (4), und wobei
c) das Überwachen der Integrität durchgeführt wird, indem erste Koordinaten der ersten Referenzstation (1.2,3), welche mittels der von der ersten Referenzstation (1.2,3) empfangenen Satellitensignale und dem mindestens einen ersten Korrekturwert (23) bestimmt werden (5), mit den bekannten Koordinaten der ersten Referenzstation (1.2,3) verglichen und auf zumindest eine erste Abweichung überprüft werden (6),
**dadurch gekennzeichnet, dass** in einem Schritt f) eine zweite Referenzstation (1.3, 3'), welche von der ersten Referenzstation (1.2, 3) verschieden ist, aus der ersten Gruppe (2) ausgewählt wird, und dass, wenn keine kritische erste Abweichung ermittelt wird (6), die Schritte b) und c) für die zweite Referenzstation (1.3,3') durchgeführt werden (10), oder dass in einem Schritt f') die zweite Referenzstation (1.3,3') aus der ersten Gruppe (2) ausgewählt wird, und dass, bei Ermitteln einer kritischen ersten Abweichung (6) die Schritte b) und c) für die zweite Referenzstation (1.3,3') anstelle der ersten Referenzstation (1.2,3) ohne Berücksichtigung der ersten Referenzstation (1.2,3) durchgeführt werden (11).

2. Verfahren nach Anspruch 1, **dadurch gekennzeichnet, dass** in einem Schritt d) zweite Koordinaten der ersten Referenzstation (1.2,3), welche nur mittels der von der ersten Referenzstation (1.2,3) empfangenen Satellitensignale bestimmt werden (7), mit den bekannten Koordinaten der ersten Referenzstation (1.2,3) verglichen und auf zumindest eine zweite Abweichung überprüft werden (8).

3. Verfahren nach einem der vorhergehenden Ansprüche, **dadurch gekennzeichnet, dass** eine zweite Gruppe der Referenzstationen, welche von der ersten Gruppe (2) verschieden ist, betrieben wird, um Satellitensignale der mehreren Satelliten zu empfangen, wobei in einem Schritt e)
- in Abhängigkeit der durch die Referenzstationen der zweiten Gruppe jeweils empfangenen Satellitensignale und der bekannten Koordinaten der jeweiligen Referenzstation der zweiten Gruppe mindestens ein zweiter Korrekturwert (23') ermittelt wird, und wobei
- dritte Koordinaten der ersten Referenzstation (1.2,3), welche mittels der von der ersten Referenzstation (1.2,3) empfangenen Satellitensignale und dem mindestens einen zweiten Korrekturwert (23') bestimmt werden, mit den bekannten Koordinaten der ersten Referenzstation (1.2,3) verglichen und auf zumindest eine dritte Abweichung überprüft werden (9).

4. Verfahren nach einem der Ansprüche 2 und 3, **dadurch gekennzeichnet, dass** in dem Schritt f') die zweite Referenzstation (1.3,3') aus der ersten Gruppe (2) ausgewählt wird, und dass, bei Ermitteln einer kritischen zweiten und/oder dritten Abweichung (8,9) die Schritte b) und c) für die zweite Referenzstation (1.3,3') anstelle der ersten Referenzstation (1.2,3) ohne Berücksichtigung der ersten Referenzstation (1.2,3) durchgeführt werden (11).

5. Verfahren nach einem der vorhergehenden Ansprüche, **dadurch gekennzeichnet, dass** unter Berücksichtigung der erfassten kritischen ersten, zweiten und/oder dritten Abweichung Unstimmigkeiten bezüglich der von der ersten (1.2,3) und/oder der zweiten Referenzstation (1.3,3') empfangenen Satellitensignale oder des mindestens einen ersten und/oder zweiten Korrekturwerts (23,23') ermittelt werden.

6. Verfahren nach einem der vorhergehenden Ansprüche, **dadurch gekennzeichnet, dass** die Schritte a) bis c) für alle Referenzstationen (1.1,1.2,1.3,...,1.n) der ersten Gruppe (2) durchgeführt werden.

7. Verfahren nach einem der vorhergehenden Ansprüche, **dadurch gekennzeichnet, dass** die ersten, die zweiten und/oder die dritten Koordinaten der ersten (1.2,3) und/oder der zweiten Referenzstation (1.3,3') mittels eines ersten und eines zweiten Koordinatenermittlungsverfahrens bestimmt werden, wobei das erste und das zweite Koordinatenermittlungsverfahren voneinander verschieden sind.

8. Verfahren nach Anspruch 7, **dadurch gekennzeichnet, dass** das erste und das zweite Koordinatenermittlungsverfahren parallel zueinander durchgeführt werden.

9. Verfahren nach einem der Ansprüche 7 und 8, **dadurch gekennzeichnet, dass** bei dem ersten oder dem zweiten Koordinatenermittlungsverfahren nach einer durchgeführten Bestimmung der ersten (5), der zweiten (7) und/oder der dritten Koordinaten (9) der ersten (1.2,3) und/oder der zweiten Referenzstation (1.3,3') mindestens ein, dem jeweiligen Koordinatenermittlungsverfahren zugeordneter Filter zurückgesetzt wird.

10. Verfahren nach einem der vorhergehenden Ansprüche, **dadurch gekennzeichnet, dass** mindestens ein Grenzwert
- für eine kritische erste, zweite und/oder dritte Abweichung, oder
- für eine Unstimmigkeit bezüglich der von der ersten (1.2,3) und/oder der zweiten Referenzstation (1.3,3') empfangenen Satellitensignale oder des mindestens einen ersten und/oder zweiten Korrekturwerts (23,23')oder für eine dem ersten und/oder dem zweiten Koordinatenermittlungsverfahren zugeordnete Konvergenzzeit
vorgegeben wird, welcher auf ein Erreichen oder ein Überschreiten desselben überwacht wird.

11. Verfahren nach Anspruch 10, **dadurch gekennzeichnet, dass** in einem Normalbetrieb der mindestens eine erste Korrekturwert (23) mehreren Nutzergeräten (15) des satellitengestützten Navigationssystems (25) zur Korrektur jeweils empfangener Satellitensignale zur Ermittlung der jeweiligen eigenen Position zur Verfügung gestellt wird, wobei bei Erreichen oder Überschreiten des mindestens einen Grenzwerts
- eine weiterführende Information (24) zur Gültigkeit des mindestens einen ersten Korrekturwerts (23), welche Angaben über das Erreichen oder Überschreiten des mindestens einen Grenzwerts enthält, erzeugt und den mehreren Nutzergeräten (15) zur Verfügung gestellt wird, oder
- das Zurverfügungstellen des mindestens einen ersten Korrekturwerts (23) für die mehreren Nutzergeräte (15) zumindest in einer ausgewählten Region eingestellt wird.

12. Verfahren nach Anspruch 3 und Anspruch 10 oder 11, **dadurch gekennzeichnet, dass** in einem Normalbetrieb der mindestens eine zweite Korrekturwert (23') mehreren Nutzergeräten (15) des satellitengestützten Navigationssystems (25) zur Korrektur jeweils empfangener Satellitensignale zur Ermittlung der jeweiligen eigenen Position zur Verfügung gestellt wird, wobei bei Erreichen oder Überschreiten des mindestens einen Grenzwerts
- eine weiterführende Information (24) zur Gültigkeit des mindestens einen zweiten Korrekturwerts (23'), welche Angaben über das Erreichen oder Überschreiten des mindestens einen Grenzwerts enthält, erzeugt und den mehreren Nutzergeräten (15) zur Verfügung gestellt wird, oder
- das Zurverfügungstellen des mindestens einen zweiten Korrekturwerts (23') für die mehreren Nutzergeräte (15) zumindest in einer ausgewählten Region eingestellt wird.

13. Verfahren zum Betreiben eines satellitengestützten Navigationssystems (25) mit mehreren Satelliten, mehreren Nutzergeräten (15) und einem Korrekturdienstsystem (12), wobei das Korrekturdienstsystem (12) bekannte und feststehende Koordinaten aufweisende Referenzstationen (1.1,1.2,1.3,...,1.n) in einem Koordinatensystem aufweist, und wobei zumindest eine erste Gruppe (2) der Referenzstationen (1.1,1.2,1.3,...,1.n) betrieben wird, um Satellitensignale der mehreren Satelliten des satellitengestützten Navigationssystems (25) zu empfangen,
**dadurch gekennzeichnet, dass**
eine Integrität der Referenzstationen (1.1,1.2,1.3,...,1.n) mittels eines Verfahrens nach einem der Ansprüche 1 bis 12 überwacht wird.

14. Korrekturdienstsystem (12), mit bekannte und feststehende Koordinaten aufweisenden Referenzstationen (1.1,1.2,1.3,...,1.n) in einem Koordinatensystem,
**dadurch gekennzeichnet, dass** das Korrekturdienstsystem (12) dazu ausgebildet ist, ein Verfahren nach einem der Ansprüche 1 bis 12 durchzuführen.

15. Satellitengestütztes Navigationssystem (25), mit
- mehreren Satelliten,
- mehreren Nutzergeräten (15), und
- einem Korrekturdienstsystem (12) nach Anspruch 14.

## Claims

1. Method for monitoring the integrity of reference stations (1.1, 1.2, 1.3, ..., 1.n), having known and fixed coordinates, of a correction service system (12) for a satellite-assisted navigation system (25) in a coordinate system, wherein at least one first group (2) of the reference stations (1.1, 1.2, 1.3, 1, ..., 1.n) is operated in order to receive satellite signals from a plurality of satellites of the signal-assisted navigation system (25), wherein
a) a first reference station (1.2, 3) is selected from the first group (2),
b) at least one first correction value (23) is determined (4) in accordance with the satellite signals respectively received by the other reference stations (1.1, 1.3, ..., 1.n) of the first group (2) and the known coordinates of the respective other reference station (1.1, 1.3, ..., 1.n) of the first group (2), and wherein
c) the monitoring of the integrity is carried out by comparing first coordinates of the first reference station (1.2, 3), which are determined (5) by means of satellite signals received by the first reference station (1.2, 3) and the at least one first correction value (23), with the known coordinates of the first reference station (1.2, 3), and checking them (6) for at least one first deviation,
**characterized in that** in a step f) a second reference station (1.3, 3'), which is different from the first reference station (1.2, 3) is selected from the first group (2), and **in that** if a critical first deviation is not determined (6), the steps b) and c) are carried out (10) for the second reference station (1.3, 3'), or **in that** in a step f') the second reference station (1.3, 3') is selected from the first group (2), and **in that** when a critical first deviation (6) is determined the steps b) and c) are carried out (11) for the second reference station (1.3, 3') instead of the first reference station (1.2, 3), without taking into account the first reference station (1.2, 3).

2. Method according to Claim 1, **characterized in that** in a step d) second coordinates of the first reference station (1.2, 3), which are only determined (7), by means of satellite signals received by the first reference station (1.2, 3), are compared with the known coordinates of the first reference station (1.2, 3) and checked (8) for at least one second deviation.

3. Method according to one of the preceding claims,
**characterized in that** a second group of reference stations, which is different from the first group (2), is operated in order to receive satellite signals of the plurality of satellites, wherein in a step e)
- at least one second correction value (23') is determined in accordance with the satellite signals which are respectively received by the reference stations of the second group, and the known coordinates of the respective reference station of the second group, and wherein
- third coordinates of the first reference station (1.2, 3), which are determined by means of the satellite signals received by the first reference station (1.2, 3) and the at least one second correction value (23'), are compared with the known coordinates of the first reference station (1.2, 3) and checked (9) for at least one third deviation.

4. Method according to one of Claims 2 and 3,
**characterized in that** in the step f') the second reference station (1.3, 3') is selected from the first group (2), and **in that** when a critical second and/or third deviation (8, 9) is determined the steps b) and c) are carried out (11) for the second reference station (1.3, 3') instead of the first reference station (1.2, 3) without taking into account the first reference station (1.2, 3).

5. Method according to one of the preceding claims,
**characterized in that** discrepancies relating to the satellite signals received by the first reference station (1.2, 3) and/or the second reference station (1.3, 3') or relating to the at least one first and/or second correction value (23, 23') are determined taking into account the detected critical first, second and/or third deviation.

6. Method according to one of the preceding claims,
**characterized in that** the steps a) to c) are carried out for all the reference stations (1.1, 1.2, 1.3, ..., 1.n) of the first group (2).

7. Method according to one of the preceding claims,
**characterized in that** the first, second and/or third coordinates of the first reference station (1.2, 3) and/or of the second reference station (1.3, 3') are determined by means of a first and second coordinate determining method, wherein the first and second coordinate determining methods differ from one another.

8. Method according to Claim 7, **characterized in that** the first and second coordinate determining methods are carried out in parallel with one another.

9. Method according to one of Claims 7 and 8,
**characterized in that** in the first or second coordinate determining method a filter which is assigned to the respective coordinate determining method is reset after the first coordinates (5), second coordinates (7) and/or third coordinates (9) of the first reference station (1.2, 3) and/or of the second reference station (1.3, 3') have been determined.

10. Method according to one of the preceding claims,
**characterized in that** at least one limiting value
- is predefined for a critical first, second and/or third deviation, or
- for a discrepancy relating to the satellite signals received by the first reference station (1.2, 3) and/or the second reference station (1.3, 3') or relating to the at least one first and/or second correction value (23, 23') or for a convergence time assigned to the first and/or the second coordinate determining method,
which limiting value is monitored to determine whether it is reached or exceeded.

11. Method according to Claim 10, **characterized in that** in a normal operating mode the at least one first correction value (23) is provided to a plurality of user devices (15) of the satellite-assisted navigation system (25) for the correction of respectively received satellite signals in order to determine their respective own positions, wherein when the at least one limiting value is reached or exceeded
- further information (24) on the validity of the at least one first correction value (23), which contains indications about whether the at least one limiting value is reached or exceeded, is generated and provided to the plurality of user devices (15), or
- the provision of the at least one correction value (23) for the plurality of user devices (15) is set at least in one selected region.

12. Method according to Claim 3 and Claim 10 or 11,
**characterized in that** in a normal operating mode the at least one second correction value (23') is provided to a plurality of user devices (15) of the satellite-assisted navigation system (25) for the correction of respectively received satellite signals in order to determine their respective own positions, wherein when the at least one limiting value is reached or exceeded,
- further information (24) on the validity of the at least one second correction value (23'), which contains indications about whether the at least one limiting value is reached or exceeded, is generated and provided to the plurality of user devices (15), or
- the provision of the at least one second correction value (23') for the plurality of user devices (15) is set at least in a selected region.

13. Method for operating a satellite-assisted navigation system (25) with a plurality of satellites, a plurality of user devices (15) and a correction service system (12), wherein the correction service system (12) has reference stations (1.1, 1.2, 1.3, ..., 1.n) having known and fixed coordinates, in a coordinate system, and wherein at least one first group (2) of the reference stations (1.1, 1.2, 1.3, ..., 1.n) is operated in order to receive satellite signals of the plurality of satellites of the satellite-assisted navigation system (25),
**characterized in that**
the integrity of the reference stations (1.1, 1.2, 1.3, ..., 1.n) is monitored by means of a method according to one of Claims 1 to 12.

14. Correction service system (12) with reference stations (1.1, 1.2, 1.3, ..., 1.n) having known and fixed coordinates, in a coordinate system,
**characterized in that** the correction service system (12) is designed to carry out a method according to one of Claims 1 to 12.

15. Satellite-assisted navigation system (25), having
- a plurality of satellites,
- a plurality of user devices (15), and
- a correction service system (12) according to Claim 14.

## Revendications

1. Procédé de surveillance de l'intégrité de stations de référence (1.1, 1.2, 1.3, ..., 1.n) d'un système de service de correction (12) destiné à un système de navigation par satellites (25) dans un système de coordonnées, les stations de référence ayant des coordonnées connues et fixes, au moins un premier groupe (2) de stations de référence (1.1, 1.2, 1.3, 1, ..., 1.n) étant utilisé pour recevoir des signaux satellites de plusieurs satellites du système de navigation par satellites (25),
a) une première station de référence (1.2, 3) étant sélectionnée dans le premier groupe (2),
b) au moins une première valeur de correction (23) étant déterminée (4) dans le premier groupe (2) en fonction des signaux satellites reçus par les autres stations de référence (1.1, 1.3, ..., 1.n) du premier groupe (2) et des coordonnées connues de l'autre station de référence respective (1.1, 1.3, ..., 1.n), et
c) la surveillance de l'intégrité étant effectuée par comparaison de premières coordonnées de la première station de référence (1.2, 3) qui sont déterminées (5) au moyen des signaux satellites reçus de la première station de référence (1.2, 3) et de l'au moins une première valeur de correction (23), aux coordonnées connues de la première station de référence (1.2, 3) et par vérification si au moins un premier écart (6) est présent,
**caractérisé en ce que**, dans une étape f), une deuxième station de référence (1.3, 3'), qui est différente de la première station de référence (1.2, 3), est sélectionnée dans le premier groupe (2) et **en ce que**, si aucun premier écart critique n'est déterminé (6), les étapes b) et c) sont réalisées (10) pour la deuxième station de référence (1.3, 3'), ou **en ce que**, dans une étape f'), la deuxième station de référence (1.3, 3') est sélectionnée dans le premier groupe (2), et **en ce que**, lorsqu'un premier écart critique (6) est déterminé, les étapes b) et c) sont réalisées pour la deuxième station de référence (1.3, 3') à la place de la première station de référence (1.2, 3) sans prendre en compte (11) la première station de référence (1.2, 3) .

2. Procédé selon la revendication 1, **caractérisé en ce que**, dans une étape d), des deuxièmes coordonnées de la première station de référence (1.2, 3), qui ne sont déterminées (7) qu'au moyen des signaux satellites reçus par la première station de référence (1.2, 3), sont comparées aux coordonnées connues de la première station de référence (1.2, 3) et vérifiées pour rechercher au moins un deuxième écart (8).

3. Procédé selon l'une des revendications précédentes, **caractérisé en ce qu'**un deuxième groupe de stations de référence, qui est différent du premier groupe (2), est utilisé pour recevoir des signaux satellites de la pluralité de satellites,
à l'étape e)
- au moins une deuxième valeur de correction (23') étant déterminée en fonction des signaux satellites reçus par les stations de référence du deuxième groupe et des coordonnées connues de la station de référence respective du deuxième groupe, et
- des troisièmes coordonnées de la première station de référence (1.2, 3), qui sont déterminées au moyen des signaux satellites reçus de la première station de référence (1.2, 3) et de l'au moins une deuxième valeur de correction (23'), étant comparées aux coordonnées connues de la première station de référence (1.2, 3) et vérifiées (9) pour rechercher au moins un troisième écart.

4. Procédé selon l'une des revendications 2 et 3, **caractérisé en ce que**, à l'étape f'), la deuxième station de référence (1.3, 3') est choisie dans le premier groupe (2), et **en ce que**, lors de la détermination d'un deuxième et/ou troisième écart critique (8, 9), les étapes b) et c) sont réalisées (11) pour la deuxième station de référence (1.3, 3') au lieu de la première station de référence (1.2, 3) sans tenir compte de la première station de référence (1.2, 3) .

5. Procédé selon l'une des revendications précédentes, **caractérisé en ce que**, compte tenu des premier, deuxième et/ou troisième écarts critiques détectés, des divergences sont déterminées par rapport aux signaux satellites reçus par la première (1.2, 3) et/ou la deuxième station de référence (1.3, 3') ou à l'au moins une première et/ou deuxième valeur de correction (23, 23').

6. Procédé selon l'une des revendications précédentes, **caractérisé en ce que** les étapes a) à c) sont réalisées pour toutes les stations de référence (1.1, 1.2, 1.3, ..., 1.n) du premier groupe (2).

7. Procédé selon l'une des revendications précédentes, **caractérisé en ce que** les première, deuxième et/ou troisième coordonnées de la première (1.2, 3) et/ou de la deuxième station de référence (1.3, 3') sont déterminées au moyen d'un premier et d'un deuxième procédé de détermination de coordonnées, les premier et deuxième procédés de détermination de coordonnées étant différents l'un de l'autre.

8. Procédé selon la revendication 7, **caractérisé en ce que** le premier et le deuxième procédé de détermination de coordonnées sont mis en œuvre parallèlement l'un à l'autre.

9. Procédé selon l'une des revendications 7 et 8, **caractérisé en ce que**, dans le premier ou le deuxième procédé de détermination de coordonnées, au moins un filtre associé au procédé de détermination de coordonnées respectif est réinitialisé après une détermination effectuée de la première (5), de la deuxième (7) et/ou de la troisième coordonnées (9) de la première (1.2, 3) et/ou de la deuxième station de référence (1.3, 3').

10. Procédé selon l'une des revendications précédentes, **caractérisé en ce qu'**au moins une valeur limite est spécifiée
- pour un premier, deuxième et/ou troisième écart critique, ou
- pour une divergence par rapport aux signaux satellites reçus par la première (1.2, 3) et/ou la deuxième station de référence (1.3, 3') ou à l'au moins une première et/ou deuxième valeur de correction (23, 23') ou pour un temps de convergence qui est associé au premier et/ou au deuxième procédé de détermination de coordonnées,
laquelle valeur limite est surveillée pour savoir si elle a été atteinte ou dépassée.

11. Procédé selon la revendication 10, **caractérisé en ce que**, en fonctionnement normal, l'au moins une première valeur de correction (23) est mise à la disposition d'une pluralité de dispositifs utilisateurs (15) du système de navigation par satellites (25) pour corriger à chaque fois les signaux satellites reçus pour déterminer la position propre respective, lorsque l'au moins une valeur limite est atteinte ou dépassée
- une information supplémentaire (24) relative à la validité de l'au moins une première valeur de correction (23) et contenant des données sur le fait que l'au moins une valeur limite est atteinte ou dépassée, étant générée et mise à la disposition de la pluralité de dispositifs utilisateurs (15), ou
- la mise d'au moins une première valeur de correction (23) à disposition de la pluralité de dispositifs utilisateurs (15) étant réglée au moins dans une région sélectionnée.

12. Procédé selon la revendication 3 et la revendication 10 ou 11, **caractérisé en ce que**, en fonctionnement normal, l'au moins une deuxième valeur de correction (23') est mise à disposition de la pluralité de dispositifs utilisateurs (15) du système de navigation par satellites (25) pour corriger chaque signal satellite reçu afin de déterminer la position propre respective, lorsque l'au moins une valeur limite est atteinte ou dépassée,
- une information supplémentaire (24) relative à la validité de l'au moins une deuxième valeur de correction (23') et contenant des données sur le fait que l'au moins une valeur limite est atteinte ou dépassée, étant générée et mise à la disposition de la pluralité de dispositifs utilisateurs (15), ou
- la mise d'au moins une première valeur de correction (23') à disposition de la pluralité de dispositifs utilisateurs (15) étant réglée au moins dans une région sélectionnée.

13. Procédé de fonctionnement d'un système de navigation par satellites (25) comprenant une pluralité de satellites, une pluralité de dispositifs utilisateurs (15) et un système de service de correction (12), le système de service de correction (12) comportant des stations de référence (1.1, 1.2, 1.3, ..., 1.n) ayant des coordonnées connues et fixes dans un système de coordonnées, et au moins un premier groupe (2) des stations de référence (1.1, 1.2, 1.3, ..., 1.n) étant utilisé pour recevoir des signaux satellites de la pluralité de satellites du système de navigation par satellites (25),
**caractérisé en ce que**
une intégrité des stations de référence (1.1, 1.2, 1.3, ..., 1.n) est surveillée au moyen d'un procédé selon l'une des revendications 1 à 12.

14. Système de service de correction (12), comportant des stations de référence (1.1, 1.2, 1.3, ..., 1.n) dans un système de coordonnées, les stations de référence ayant des coordonnées connues et fixes, **caractérisé en ce que** le système de service de correction (12) est conçu pour mettre en œuvre un procédé selon l'une des revendications 1 à 12.

15. Système de navigation par satellites (25), comprenant
- une pluralité de satellites,
- une pluralité de dispositifs utilisateurs (15), et
- un système de service de correction (12) selon la revendication 14.
